# FASCICULE DE BREVET EUROPEEN

(11) **EP 1 478 291 B1**
(45) Date de publication et mention de la délivrance du brevet: **27.12.2006**
(21) Numéro de dépôt: 03718912.3
(22) Date de dépôt: 27.02.2003
(51) Int. Cl.: A61B 17/70

(54) **ELEMENT DE PANNEAU AVEC UNE COUCHE CHAUFFANTE**
PLATTENELEMENT MIT BEHEIZTER FLÄCHE
PANEL ELEMENT WITH A HEATING LAYER

(30) Priorité: 27.02.2002 DE 10208552
(43) Date de publication de la demande: 24.11.2004
(73) Titulaire: SAINT-GOBAIN GLASS FRANCE, 92400 Courbevoie (FR)
(72) Inventeur: MANN, Detlef, D-91710 Gunzenhausen (DE)
(74) Mandataire: Aupetit, Muriel J. C.
(86) Numéro de dépôt international: PCT/FR2003/000632
(87) Numéro de publication internationale: WO 2003/071964

(56) Documents cités:
- EP-A- 0 451 608
- DE-A- 19 860 870
- FR-A- 1 104 595
- US-A- 3 790 745
- US-A- 5 023 403

## Description

L'invention se rapporte à un élément de panneau avec une vitre trempée qui est pourvue d'un revêtement de surface total, électriquement conducteur et chauffant par l'application d'une tension électrique par des électrodes, et dans lequel une zone partielle du revêtement est séparée électriquement par une ligne de séparation. Des revêtements chauffants de ce type appliqués sur du verre servent en règle générale à débarrasser de la buée et de la glace les vitres utilisées comme vitres transparentes, afin que l'on puisse sans difficultés voir au travers.

Les caractéristiques de base sont divulguées dans le document DE-A1-40 11 541, sous la forme d'une vitre d'alarme trempée à chauffage électrique. A l'aide d'une ligne de séparation tracée par un faisceau laser, une zone partielle du revêtement chauffant électriquement conducteur de cette vitre est séparée électriquement de la zone superficielle principale du revêtement. La zone partielle est utilisée comme capteur pour détecter une rupture de la vitre trempée en question. Celle-ci peut être intégrée dans une vitre feuilletée ou dans un élément de vitrage isolant. De préférence, on emploie un système de couches, qui peut supporter une forte charge thermique et qui peut être déposé sur la surface de la vitre bien avant la trempe de celle-ci.

Le document DE-A1-36 44 297 présente une pluralité d'exemples pour diviser des revêtements chauffants d'un pare-brise de véhicule. Les divisions peuvent ainsi être réalisées par des plages non revêtues en surface et/ou par des découpes ménagées par voie mécanique ou par un faisceau laser. Elles servent à établir et à conduire de façon adéquate un flux de courant à l'intérieur de la face revêtue et doivent garantir une densité de courant aussi uniforme que possible dans les faces concernées.

Le fonctionnement de ces couches chauffantes requiert des tensions électriques relativement élevées. Il faut prévoir une isolation électrique sûre, en particulier sur le bord de la vitre concernée, éventuellement revêtue sur toute sa surface.

Dans un autre élément de panneau (DE-B-2 113 876), le revêtement chauffant et électriquement conducteur ne s'étend pas jusqu'au bord du panneau, de telle manière qu'un cadre d'écartement d'un vitrage isolant puisse être collé directement sur la région du bord (non revêtue) de la vitre sans précautions particulières. Les conducteurs électriques d'alimentation des électrodes sont menés à travers des trous rendus étanches dans le cadre d'écartement.

Il est connu que l'on peut produire par différentes méthodes des plages non revêtues sur un substrat par ailleurs entièrement revêtu. A l'aide de masques placés pendant l'opération de revêtement, le substrat peut être maintenu libre d'emblée dans les zones recouvertes. Pour enlever un revêtement sur des zones partielles d'un substrat, le revêtement peut à nouveau être enlevé par abrasion mécanique, par voie chimique ou par exemple par des faisceaux laser.

Dans l'élément de panneau connu par le document EP-A2-0 989 781 ainsi que dans la solution proposée par le document DE-U-299 23 417, le revêtement s'étendant jusqu'au bord de la vitre est masqué par une couche isolante qui le recouvre, de telle façon qu'il n'existe au moins pas de liaison électriquement conductrice vers le cadre d'écartement. Ce dernier peut en outre être constitué d'une matière à haute résistance électrique, par exemple du plastique. De même, on peut éventuellement employer des colles à haute résistance électrique. Dans ces modèles, les conducteurs d'alimentation vers les électrodes sont conduits entre la surface revêtue de la vitre et le cadre d'écartement ou à travers des trous dans le cadre d'écartement.

Le document DE-A1-196 44 004 décrit une vitre feuilletée pour des automobiles, dont le feuilleté comprend un film de polymère, qui est à son tour pourvu d'un revêtement électriquement conducteur, isolant thermiquement mais cependant sensible à la corrosion. Une étroite bande de bord du revêtement sur le film est séparée de la zone superficielle principale du revêtement à l'aide d'une ligne de séparation, afin d'éviter la propagation d'influences corrosives partant du bord du film jusque dans le champ de vision de la vitre. La ligne de séparation est taillée de façon visuellement imperceptible dans le revêtement à l'aide d'un faisceau laser. Le faisceau laser est réglé de telle manière qu'il ne soit absorbé que par la matière du revêtement et qu'il ne détruise celle-ci que dans une zone étroitement limitée localement par la chaleur dégagée, tandis que le film de support lui-même reste intact.

L'invention a pour objet de présenter un élément de panneau encore amélioré avec une couche chauffante, qui convient également mais pas uniquement comme élément de panneau chauffant autonome sans avoir la fonction d'une vitre de fenêtre.

Conformément à l'invention, cet objectif est atteint par les caractéristiques de la revendication 1. Les caractéristiques des revendications secondaires proposent des perfectionnements avantageux de cet objet.

En séparant le champ chauffant proprement dit d'une région de bord du revêtement à l'aide d'au moins une ligne de séparation périphérique, on assure d'abord une isolation électrique sûre du bord de l'élément de panneau. En cas de fonctionnement avec des tensions relativement élevées, on peut aussi prévoir deux ou plusieurs lignes de séparation périphériques parallèles. Ceci permet en principe le fonctionnement d'un tel élément de panneau chauffant à la tension du réseau national respectif (par exemple 110 ou 230 V).

Bien entendu, on peut - d'une façon connue en soi - prévoir aussi sur un élément de panneau conforme à l'invention plusieurs chemins de courant, à connecter le cas échéant indépendamment l'un de l'autre, pour pouvoir connecter ou déconnecter la puissance de chauffage par paliers, selon les besoins.

La longueur et la largeur du chemin de courant ou des chemins de courant ainsi que la conductibilité superficielle (en ohms par unité de surface) du système de couches utilisé sont déterminantes pour la puissance électrique absorbée et la puissance de chauffage de l'élément de panneau. Selon la tension de service respectivement disponible ou prédéterminée, on peut régler dans de larges limites des puissances de chauffage différentes par le dessin du chemin de courant, pour lesquelles la température maximale admissible dépendra également du domaine d'utilisation de l'élément de panneau terminé. Par exemple, si des contacts directs par l'utilisateur ne sont pas possibles ou ne sont pas acceptables, les températures peuvent alors se situer nettement au-dessus de 50°C. Toutefois, il faut naturellement éviter que des couches de colle adhérant sur la vitre à revêtir, par exemple des films de colle d'une vitre feuilletée, ne soient endommagées par les températures atteintes en fonctionnement normal.

De tels éléments de panneau peuvent être installés dans ou sur des bâtiments, sur des murs ou être intégrés dans ceux-ci, au lieu des corps chauffants habituels. A cet effet, ils ne doivent pas obligatoirement être réalisés sous forme de fenêtres, mais peuvent l'être sous forme de miroirs, de surfaces décoratives, etc. Le cas échéant, il est également possible d'utiliser de tels éléments de panneaux de manière générale pour la production superficielle de chaleur dans des appareils techniques, par exemple des appareils ménagers, où leur faible hauteur totale et leur surface lisse très facile à nettoyer peuvent présenter de grands avantages.

Si, même dans une application de l'élément de panneau comme élément chauffant plat sans fonction de fenêtre, le flux de courant ne doit pas obligatoirement être réparti uniformément partout, il est cependant avantageux de le régler ainsi au moins approximativement, afin d'éviter des surchauffes locales et des dégradations du revêtement chauffant. Certes, avec des systèmes de couches déposés par des procédés modernes, on peut tabler sur une épaisseur très régulière de la couche totale, il n'est cependant guère possible, à l'inversé, de réaliser des épaisseurs volontairement différentes du revêtement, et par conséquent des résistances de surface différentes, sur une plage déterminée d'un substrat.

Lors de la fabrication d'éléments de panneaux chauffants sans fonction de fenêtre, on peut le cas échéant se passer d'un traitement antireflet de la couche conductrice proprement dite, qui se compose par exemple d'argent ou d'un autre métal conducteur, ce qui permet d'une part de simplifier l'alimentation en courant (les couches antireflet diélectriques usuelles ne sont pas ou sont très mauvaises conductrices), d'autre part d'obtenir des effets de surface décoratifs. La détermination exacte des matières adéquates pour le système de couches chauffant est cependant laissée à l'appréciation de l'homme de métier, auquel il incombe de calibrer la puissance de chauffage désirée.

En complément, on peut prévoir un ou plusieurs capteurs de température pour détecter la température réelle de l'élément de panneau. De tels capteurs de température peuvent même avoir la forme de limiteurs de courant (par exemple de thermistors, dont la résistance électrique/ohmique augmente lorsque la température augmente). En variante, il peut être prévu un organe de commutation séparé pour déconnecter le courant de chauffage en cas de menace de surchauffe de l'élément de panneau, et qui peut être commandé par un capteur de température.

Comme dans l'état de la technique dans ce domaine, la zone de bord périphérique séparée peut aussi, dans l'élément de panneau conforme à l'invention, avoir en variante la forme d'un détecteur de rupture pour le déclenchement d'une alarme, si on la sépare en un endroit et si l'on prévoit de part et d'autre de la ligne de séparation des électrodes pour un circuit de courant de veille. De tels circuits de courant de veille peuvent fonctionner avec des puissances ou des tensions électriques tellement basses qu'il n'en résulte aucun danger.

D'autres détails et avantages de l'objet de l'invention seront fournis par les dessins d'exemples de réalisation et par leur description détaillée qui suit.

Dans ces dessins en représentation simplifiée, la
- Fig. 1: est une vue en perspective d'un élément de panneau avec un revêtement chauffant et divisé par des lignes de séparation; la
- Fig. 2: montre une vue identique d'une variante de l'élément de panneau; et la
- Fig. 3: représente une coupe à travers la région du contact électrique d'une forme de réalisation, dans laquelle l'élément de panneau de la figure 1 fait partie d'une vitre feuilletée.

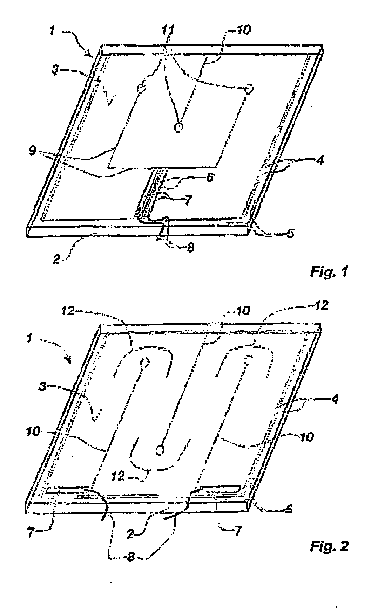

Suivant la figure 1, un élément de panneau 1 comprend une vitre trempée 2, dont une première face principale - ici la face supérieure - est entièrement recouverte d'un revêtement électriquement conducteur 3. Le revêtement 3 peut, mais ne doit cependant pas être optiquement transparent. De préférence, il se compose d'un système de couches résistant à une charge thermique élevée, comprenant au moins une couche métallique, qui a été déposé avant la trempe de la vitre 2.

Le long du bord de la vitre 2, deux fines lignes de séparation 4, tracées en périphérie parallèlement l'une à l'autre à une faible distance - 1 à 2 cm - de ce bord sont ménagées dans le revêtement. Une bande de bord extérieure périphérique 5 ainsi formée est électriquement séparée de la plus grande partie restante de la surface revêtue. Elle forme une isolation de bord de l'élément de panneau 1.

Partant des deux lignes de séparation périphériques 4, une autre paire de lignes de séparation parallèles 6 s'étend sous un angle sur une certaine longueur dans la surface du revêtement 3. De chaque côté de ces lignes de séparation 6, il est prévu une électrode en forme de bande 7, qui est chaque fois raccordée électriquement au revêtement 3. Par des câbles 8, les deux électrodes 7 peuvent être reliées à une tension électrique.

Pour déterminer un tracé défini du courant de chauffage à travers la face du revêtement 3, il est prévu, de façon connue en soi, d'autres lignes de séparation 9, 10. La ligne de séparation 9, globalement en forme de U, se raccorde directement aux deux lignes de séparation 6, les deux branches du U étant parallèles aux lignes de séparation 6 et aux deux côtés latéraux de l'élément de panneau 1. La ligne de séparation rectiligne 10 s'étend depuis les lignes de séparation 4 entre les deux branches du U de la ligne de séparation 9. Aux extrémités libres des lignes de séparation 9, respectivement 10 dans la surface, il est prévu dans la surface du revêtement des évidements 11, qui doivent éviter des densités de courant excessives dans la région de ces extrémités. Les lignes de séparation 9 et 10 forment, tout comme les lignes de séparation périphériques 4, des interruptions à haute résistance électrique dans le revêtement, à travers lesquelles aucun courant ne peut passer.

Au total, il en résulte un chemin de courant d'une longueur relativement grande et de largeur relativement faible, qui utilise toute la surface du revêtement 3 entourée par les lignes de séparation périphériques 4. Pour qu'il s'établisse une densité de courant aussi uniforme que possible aux transitions entre le revêtement 3 et les électrodes 7, les électrodes 7 ont une longueur sensiblement égale à la largeur du chemin de courant à cet endroit.

On ne montre ici qu'un exemple de réalisation parmi une pluralité de dessins possibles et utilisables des lignes de séparation définissant le chemin de courant. Il est également possible, sans grands frais supplémentaires - par exemple à l'aide d'un robot - d'utiliser par exemple le laser pour tracer des lignes de séparation courbes dans le revêtement. D'autres exemples se déduisent de l'état de la technique discuté dans l'introduction.

La réalisation de l'élément de panneau 1 suivant la figure 2 se distingue de la première réalisation essentiellement par la disposition modifiée des deux électrodes et par le trajet du flux de courant. Les deux électrodes 7 sont situées ici à proximité des lignes de séparation 4 parallèlement à un des côtés de la vitre 2. Cette disposition des électrodes 7 à proximité d'un côté de la vitre est moins apparente à la vue que la réalisation illustrée dans la figure 1. Le chemin de courant entre les électrodes présente un trajet sinueux déterminé par des lignes de séparation 10. Dans les régions des déviations, il est en outre prévu des lignes courbes de séparation ou de guidage 12, qui sont à nouveau destinées à éviter des pointes de courant aux extrémités libres des lignes de séparation rectilignes 10. Bien entendu, de telles lignes de guidage 12 peuvent également être utilisées dans la réalisation de la figure 1. En outre, on peut prévoir plusieurs lignes de guidage parallèles. Le dessin le plus adapté dans chaque cas de telles lignes de guidage du courant ainsi que des lignes de séparation 9 et 10 doit être déterminé au cas par cas par des essais.

Des éléments de panneau du type représenté dans les figures 1 et 2 conviennent par exemple pour être installés dans des vitrages isolants, où le cadre d'écartement associé doit simplement être collé sur la région du bord 5. Les câbles 8 seraient alors - de façon également connue en soi - réalisés sous la forme de câbles plats ou de films imprimés avec des sections conductrices et conduits vers l'extérieur, sans aucun contact électrique avec la région du bord entre le cadre d'écartement et la surface de la vitre, donc dans le plan du collage. La seconde vitre du vitrage isolant forme un masquage arrière du revêtement.

De même, de tels éléments de panneau peuvent être suspendus directement devant un mur ou intégrés dans celui-ci, sans être au préalable munis d'un recouvrement arrière, si on garantit par ailleurs qu'il n'existe aucun danger dû à la tension électrique de fonctionnement.

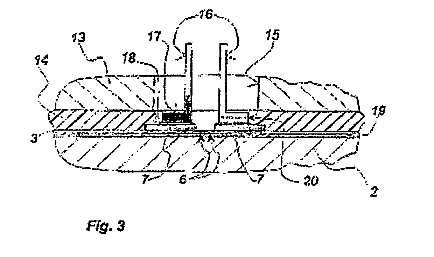

Dans une autre variante, qui est montrée de façon fragmentaire dans la figure 3, la vitre 2 de la figure 1 a été intégrée dans une vitre feuilletée, dont la seconde vitre rigide 13 en verre ou en plastique est assemblée à plat, de la façon usuelle, par une couche ou une feuille adhésive 14 à la vitre trempée 2. On voit dans la coupe transversale dans le revêtement 3 la disposition des deux lignes de séparation 6 entre les électrodes 7, qui sont appliquées directement sur le revêtement 3. En variante à cette disposition, les électrodes peuvent aussi être placées en dessous du revêtement, c'est-à-dire avant le dépôt de celui-ci sur la surface de la vitre. On peut les réaliser sous la forme de minces films métalliques ou aussi de bandes à cuire (lors de la trempe de la vitre 2) à partir d'une pâte de sérigraphie conductrice. Des réalisations d'électrodes appropriées, qui peuvent également être appelées des rails collecteurs, sont décrites à de multiples reprises dans l'état de la technique.

La seconde vitre 13 et la couche adhésive 14 sont pourvues d'un petit évidement, respectivement d'un petit trou 15 dans la région des électrodes. Celui-ci sert pour la sortie des raccords électriques des électrodes 7. Deux pattes de contact 16 sont fixées sur ces dernières à l'aide de pieds à braser 17 et de points de brasage 18. Les fiches de contact des pattes de contact 16 se trouvent à l'intérieur de l'évidement 15 et permettent l'engagement d'une fiche de raccordement adéquate (non représentée), qui doit naturellement être protégée mécaniquement de façon convenable contre l'extraction.

Une telle réalisation du contact électrique de la couche chauffante vers l'extérieur convient particulièrement bien pour une utilisation de l'élément de panneau comme plaque chauffante sans fonction de fenêtre. Naturellement, dans la réalisation selon la figure 3 tout comme dans les figures 1 et 2, la paire d'électrodes 7 peut être reliée à un câble permanent qui peut, par une fiche à son extrémité libre, être raccordé à une source de courant.

Les électrodes 7 sont elles-mêmes opaques, le cas échéant elles sont cependant visibles par le côté non revêtu de la vitre 2. Elles peuvent dès lors constituer des éléments décoratifs, par exemple - en variante par rapport à la forme de simple bande illustrée dans le dessin - figurer un logo de firme ou de fabricant. En outre, on peut également obtenir certains effets de couleur en colorant la pâte de sérigraphie conductrice utilisée de préférence pour la réalisation des électrodes.

Bien entendu, la région du contact électrique peut également, si nécessaire, être masquée à la vue par des moyens appropriés, par exemple en appliquant ou en surimprimant un motif décoratif opaque, ou aussi en utilisant une masse de verre de teinte très foncée pour la vitre trempée 2. Celle-ci formera en règle générale la surface de l'élément de panneau tournée vers l'espace à chauffer. En remplacement d'éventuels masquages, on a disposé ici, dans la région des électrodes et des pattes de contact, un revêtement opaque, électriquement non conducteur 19 entre la surface revêtue de la vitre 2 et le revêtement chauffant 3, qui a déjà été imprimé sur la surface du verre et cuit lors de la trempe avant le dépôt du revêtement 3. En variante à la représentation, on peut appliquer les deux électrodes 7 directement sur le revêtement opaque 19 - par exemple par impression de deux bandes d'une pâte de sérigraphie conductrice - et seulement ensuite, comme on l'a déjà indiqué, déposer le revêtement conducteur 3 au-dessus du revêtement opaque 19 et des électrodes 7. Ceci présente surtout l'avantage qu'après le dépôt du revêtement mécaniquement fragile 3, il ne faut pas encore une fois appliquer à plat une nouvelle matière sur la surface revêtue. En outre, on garantit ainsi une bonne adhérence des électrodes 7 sur la surface du verre.

Pour la livraison, on obturera l'évidement 15 avec un bouchon étanche, durablement élastique (non représenté), qui permettra éventuellement le placement et le retrait de la fiche mentionnée, mais qui empêchera la propagation d'humidité et de saletés jusqu'aux électrodes 7 et au revêtement 3.

Dans la représentation suivant la figure 3, il serait possible de combiner une des pattes de contact 16 avec un capteur de température, par exemple avec une résistance à autorégulation en fonction de la température, qui détecte localement la température réelle de l'élément de panneau, respectivement du revêtement, et qui limite éventuellement la puissance électrique absorbée à des valeurs inoffensives. Un tel capteur de température pourrait avantageusement être intégré dans un pied de brasage 17 d'une des pattes de contact 16, comme cela est indiqué en traits mixtes 20 dans le pied de la patte de contact de droite 16, de telle façon qu'il soit situé directement dans le flux de courant du circuit de courant de chauffage.

## Revendications

1. Elément de panneau (1) avec une vitre trempée (2), qui est pourvue d'un revêtement de surface total (3), électriquement conducteur et chauffant par l'application d'une tension électrique par des électrodes (7), dans lequel une zone partielle du revêtement est séparée électriquement par une ligne de séparation, "**caractérisé en ce qu'**une zone superficielle intérieure du revêtement (3) est séparée électriquement, par deux ou plusieurs lignes de séparation périphériques parallèles (4), à proximité d'une région de bord extérieure (5) du revêtement (3) et **en ce que** les électrodes (7) sont disposées à l'intérieur de la zone superficielle entourée par la ligne de séparation (4), la résistance électrique du revêtement chauffant (3) étant réglée de façon à fonctionner avec la tension du réseau électrique national, de telle manière qu'une température prédéterminée ne soit pas dépassée lors de l'application de cette tension de réseau aux deux électrodes (7), et des raccords des électrodes (7) étant menés à l'écart de la vitre revêtue (2) sans contact avec la région du bord (5).

2. Elément de panneau suivant la revendication 1, **caractérisé en ce que** le flux de courant est conduit chaque fois entre deux électrodes (7) le long d'un tracé prédéterminé, qui est obtenu par une division isolante locale du revêtement dans la zone superficielle entourée par la ligne de séparation (4).

3. Elément de panneau suivant l'une quelconque des revendications précédentes, **caractérisé en ce que** le revêtement (3) est formé par un système de couches, résistant à une charge thermique élevée, déposé avant la trempe de la vitre (2) sur la surface de celle-ci.

4. Elément de panneau suivant l'une quelconque des revendications précédentes, **caractérisé en ce que** des raccords des électrodes sont menés vers l'extérieur au-dessus de la région du bord en étant électriquement isolés par rapport à celle-ci.

5. Elément de panneau suivant l'une quelconque des revendications précédentes, **caractérisé en ce qu'**une autre plaque (13) est contrecollée sur le côté revêtu de la vitre (2).

6. Elément de panneau suivant l'une quelconque des revendications précédentes, **caractérisé en ce qu'**un cadre d'écartement d'un vitrage isolant est collé sur la région de bord séparée (5) du revêtement.

7. Elément de panneau suivant l'une des revendications 5 ou 6, **caractérisé en ce qu'**il est prévu au moins un évidement (15) dans une autre plaque (13) assemblée à la vitre revêtue (2) pour la sortie des raccords électriques des électrodes (7).

8. Elément de panneau suivant la revendication 7, **caractérisé en ce que** des raccords de fiche (17) des électrodes (7) sont disposés dans l'évidement (15).

9. Elément de panneau suivant l'une quelconque des revendications précédentes, **caractérisé par** un capteur de température destiné à détecter une température réelle du revêtement chauffant.

10. Elément de panneau suivant la revendication 9, **caractérisé par** un élément de commutation à commander par le capteur de température pour interrompre ou réduire le courant de chauffage en cas de dépassement d'un seuil de température prédéterminé.

11. Elément de panneau suivant l'une quelconque des revendications précédentes, **caractérisé en ce que** la région de bord séparée (5) du revêtement (3) est séparée par au moins une ligne de séparation et est utilisée comme chemin de courant.

12. Elément de panneau suivant l'une quelconque des revendications précédentes, **caractérisé en ce qu'**au moins la région des électrodes (7) est cachée à la vue à l'aide d'un masque.

13. Elément de panneau suivant la revendication 12, **caractérisé en ce que** le masquage visuel est obtenu en utilisant une masse de verre opaque pour la vitre trempée (2).

14. Elément de panneau suivant la revendication 12 ou 13, **caractérisé en ce que** le masquage visuel est réalisé par un élément décoratif opaque (19).

15. Elément de panneau suivant la revendication 14, **caractérisé en ce que** l'élément décoratif opaque (19) est disposé à plat entre la surface de la vitre (2) et le revêtement chauffant (3).

16. Elément de panneau suivant l'une quelconque des revendications précédentes, **caractérisé en ce que** les électrodes (7) sont réalisées par dépôt et cuisson d'une pâte de sérigraphie électriquement conductrice, avant ou après le dépôt du revêtement chauffant (3).

17. Elément de panneau suivant la revendication 16, **caractérisé en ce que** les électrodes constituent des éléments décoratifs visibles.

18. Elément de panneau suivant la revendication 16 ou 17, **caractérisé en ce que** des raccords de fiche (16) destinés à engager des conducteurs de raccordement électrique sont reliés aux électrodes (7).

## Claims

1. A panel element (1) with a toughened glass pane (2), provided with a total surface coating (3), which is electrically conducting and heated by applying an electric voltage by means of electrodes (7), in which a partial zone of the coating is electrically separated by a separating line, **characterized in that** an inner surface zone of the coating (3) is electrically separated, by two or more parallel peripheral separating lines (4), from an external edge region (5) of the coating (3) and **in that** the electrodes (7) are placed inside the surface zone surrounded by the separating line (4), the electrical resistance of the heated coating (3) being adjusted so as to operate at the voltage of the national electrical network, such that a predetermined temperature is not exceeded on applying this network voltage to the two electrodes (7), and the connections of the electrodes (7) being taken away from the coated pane (2), without contact with the edge region (5).

2. The panel element as claimed in claim 1, **characterized in that** the current flow is conducted each time between two electrodes (7) along a predetermined route, which is obtained by a locally insulating division of the coating in the surface zone surrounded by the separating line (4).

3. The panel element as claimed in any one of the preceding claims, **characterized in that** the coating (3) is formed by a system of layers, withstanding a high heat load, deposited before toughening the pane (2) on the surface thereof.

4. The panel element as claimed in any one of the preceding claims, **characterized in that** the connections of the electrodes are taken toward the outside above the edge region thereby being electrically insulated therefrom.

5. The panel element as claimed in any one of the preceding claims, **characterized in that** another plate (13) is laminated to the coated side of the pane (2).

6. The panel element as claimed in any one of the preceding claims, **characterized in that** a spacer for an insulating glazing unit is adhesively bonded to the separated edge region (5) of the coating.

7. The panel element as claimed in either of claims 5 and 6, **characterized in that** at least one recess (15) is provided in another plate (13) assembled to the coated pane (2) for bringing out the electrical connections for the electrodes (7).

8. The panel element as claimed in claim 7, **characterized in that** plug connections (17) for the electrodes (7) are placed in the recess (15).

9. The panel element as claimed in any one of the preceding claims, **characterized by** a temperature sensor for detecting the actual temperature of the heated coating.

10. The panel element as claimed in claim 9, **characterized by** a switching element to be controlled by the temperature sensor in order to cut or reduce the heating current should a predetermined temperature threshold be exceeded.

11. The panel element as claimed in any one of the preceding claims, **characterized in that** the separated edge region (5) of the coating (3) is separated by at least one separating line and is used as a current path.

12. The panel element as claimed in any one of the preceding claims, **characterized in that** at least the region of the electrodes (7) is hidden from view by means of a mask.

13. The panel element as claimed in claim 12, **characterized in that** the visual masking is obtained by using an opaque glass compound for the toughened pane (2).

14. The panel element as claimed in claim 12 or 13, **characterized in that** the visual masking is made by an opaque decorative element (19).

15. The panel element as claimed in claim 14, **characterized in that** the opaque decorative element (19) is placed flat between the surface of the pane (2) and the heated coating (3).

16. The panel element as claimed in any one of the preceding claims, **characterized in that** the electrodes (7) are made by depositing and baking an electrically conducting screen-printing paste, before or after depositing the heated coating (3).

17. The panel element as claimed in claim 16, **characterized in that** the electrodes form visible decorative elements.

18. The panel element as claimed in claim 16 or 17, **characterized in that** the plug connections (16) for engaging electrical connection conductors are connected to the electrodes (7).

## Patentansprüche

1. Plattenelement (1) mit einer vorgespannten Glasscheibe (2), die mit einer elektrisch leitfähigen, durch Anlegen einer elektrischen Spannung über Elektroden (7) beheizbaren vollflächigen Beschichtung (3) versehen ist, wobei eine Teilfläche der Beschichtung durch eine Trennlinie elektrisch abgeteilt ist, **dadurch gekennzeichnet, dass** ein innerer Oberflächenbereich der Beschichtung (3) durch zwei oder mehr parallele umlaufende Trennlinien (4) elektrisch gegenüber einem äußeren Randbereich (5) der Beschichtung (3) abgeteilt ist, und **dadurch**, dass die Elektroden (7) innerhalb des von der Trennlinie (4) umschriebenen Flächenbereichs angeordnet sind, der elektrische Widerstand der beheizbaren Beschichtung (3) auf den Betrieb mit der landesüblichen elektrischen Netzspannung derart eingestellt ist, dass beim Anlegen dieser Netzspannung an die beiden Elektroden (7) eine vorgegebene Temperatur nicht überschritten wird, und dass Anschlüsse der Elektroden (7) ohne Berührung des Randbereichs (5) von der beschichteten Glasscheibe (2) weggeführt sind.

2. Plattenelement (1) nach Anspruch 1, **dadurch gekennzeichnet, dass** der Stromfluss zwischen je zwei Elektroden (7) entlang einem vorgegebenen Verlauf geleitet wird, der durch lokales isolierendes Unterteilen der Beschichtung in dem von der Trennlinie (4) umschriebenen Flächenbereich erzeugt ist.

3. Plattenelement nach einem der vorstehenden Ansprüche, **dadurch gekennzeichnet, dass** die Beschichtung (3) durch ein vor dem Vorspannen der Glasscheibe (2) auf deren Oberfläche abgeschiedenes, thermisch hoch belastbares Schichtsystem gebildet ist.

4. Plattenelement nach einem der vorstehenden Ansprüche, **dadurch gekennzeichnet, dass** die Anschlüsse der Elektroden über den Randbereich hinweg gegenüber diesem elektrisch isoliert nach außen geführt sind.

5. Plattenelement nach einem der vorstehenden Ansprüche, **dadurch gekennzeichnet, dass** auf die beschichtete Seite der Glasscheibe (2) eine weitere Platte (13) auflaminiert ist.

6. Plattenelement nach einem der vorstehenden Ansprüche, **dadurch gekennzeichnet, dass** mit dem abgeteilten Randbereich (5) der Beschichtung ein Abstandhalter-Rahmen einer Isolierverglasung verklebt ist.

7. Plattenelement nach einem der Ansprüche 5 oder 6, **dadurch gekennzeichnet, dass** zum Abführen der elektrischen Anschlüsse der Elektroden (7) in einer mit der beschichteten Glasscheibe (2) verbundenen weiteren Platte (13) mindestens eine Ausnehmung (15) vorgesehen ist.

8. Plattenelement nach Anspruch 7, **dadurch gekennzeichnet, dass** in der Ausnehmung (15) Steckanschlüsse (17) der Elektroden (7) angeordnet sind.

9. Plattenelement nach einem der vorstehenden Ansprüche, **gekennzeichnet durch** einen Temperaturfühler zum Erfassen einer Ist-Temperatur der heizbaren Beschichtung.

10. Plattenelement nach Anspruch 9, **gekennzeichnet durch** ein von dem Temperaturfühler steuerbares Schaltelement zum Unterbrechen oder Reduzieren des Heizstroms bei Überschreiten einer vorgegebenen Temperaturschwelle.

11. Plattenelement nach einem der vorstehenden Ansprüche, **dadurch gekennzeichnet, dass** der abgeteilte Randbereich (5) der Beschichtung (3) durch mindestens eine Trennlinie aufgetrennt ist und als Strompfad verwendet wird.

12. Plattenelement nach einem der vorstehenden Ansprüche, **dadurch gekennzeichnet, dass** zumindest der Bereich der Elektroden (7) mithilfe einer Maske optisch kaschiert ist.

13. Plattenelement nach Anspruch 12, **dadurch gekennzeichnet, dass** die optische Kaschierung durch Verwendung einer opaken Glasmasse für die vorgespannte Glasscheibe (2) erreicht wird.

14. Plattenelement nach Anspruch 12 oder 13, **dadurch gekennzeichnet, dass** die optische Kaschierung durch ein opakes Dekor (19) hergestellt wird.

15. Plattenelement nach Anspruch 14, **dadurch gekennzeichnet, dass** das opake Dekor (19) flächig zwischen der Oberfläche der Glasscheibe (2) und der beheizbaren Beschichtung (3) angeordnet ist.

16. Plattenelement nach einem der vorstehenden Ansprüche, **dadurch gekennzeichnet, dass** die Elektroden (7) vor oder nach dem Abscheiden der beheizbaren Beschichtung (3) durch Auftragen und Einbrennen einer elektrisch leitfähigen Siebdruckpaste hergestellt werden.

17. Plattenelement nach Anspruch 16, **dadurch gekennzeichnet, dass** die Elektroden als sichtbare, dekorative Elemente ausgeführt sind.

18. Plattenelement nach Anspruch 16 oder 17, **dadurch gekennzeichnet, dass** mit den Elektroden (7) Steckanschlüsse (16) zum Aufstecken elektrischer Anschlussleitungen verbunden sind.
